# FASCICULE DE BREVET EUROPEEN

(11) **EP 3 287 324 B1**
(45) Date de publication et mention de la délivrance du brevet: **27.02.2019**
(21) Numéro de dépôt: 17182057.4
(22) Date de dépôt: 19.07.2017
(51) Int. Cl.: B60R 13/02

(54) **ASSEMBLAGE D'UNE STRUCTURE D HABILLAGE A UNE OUVERTURE REALISEE DANS UNE PAROI DE GARNITURE D'UN VEHICULE PRESENTANT UNE PATTE DE RETENUE EN M**
MONTAGE EINER VERKLEIDUNGSSTRUKTUR IN EIN ÖFFNUNGSELEMENT IN EINER EINLAGEWAND EINES FAHRZEUGS, DIE MIT EINEM M-FÖRMIGEN HALTEELEMENT AUSGESTATTET IST
ASSEMBLY OF A LINING STRUCTURE WITH AN OPENING MADE IN A TRIM WALL OF A VEHICLE HAVING AN M-SHAPED RETAINING TAB

(30) Priorité: 26.08.2016 FR 1657947
(43) Date de publication de la demande: 28.02.2018
(73) Titulaire: RENAULT s.a.s., 92100 Boulogne-Billancourt (FR)
(72) Inventeur: BOUILLON, Jean-Charles, 78940 La-Queue-Lez-Yvelines (FR)

(56) Documents cités:
- JP-A- 2001 105 988
- JP-A- 2001 213 233
- JP-A- 2003 090 311

## Description

L'invention concerne l'assemblage d'une structure d'habillage à une ouverture réalisée dans une paroi de garniture d'un véhicule présentant une patte de retenue en M. Une telle structure d'habillage peut notamment recevoir un cache pour obturer cette ouverture lorsqu'elle ne sert pas et/ou recevoir un élément de maintien par exemple pour un crochet ou similaire. L'invention est plus particulièrement adaptée à une paroi de garniture de pavillon de véhicule automobile, mais peut être utilisée pour toute paroi de garniture d'un habitacle de véhicule.

Des ouvertures sont souvent réalisées dans des parois de garniture de véhicule, notamment des parois de l'habitacle. De telles ouvertures peuvent servir à la fixation d'éléments internes à l'habitacle, tels que par exemple des crochets de retenue de filet ou autre. Ces ouvertures sont habituellement habillées par une structure d'habillage qui comprend une partie de retenue fixée sur une face non visible de la paroi de garniture coopérant avec une partie d'habillage située du côté d'une face visible de la paroi de garniture. En général, la partie d'habillage est simplement clipsée sur la partie de retenue en prenant en sandwich les bords de l'ouverture de la paroi de garniture.

Pour des raisons de sécurité, il peut être prévu que la paroi de garniture puisse être déformée en cas de choc. A cet effet, la paroi de garniture peut présenter une pliure, ce qui peut entrainer la désolidarisation de la structure d'habillage clippée sur cette dernière. Un tel phénomène peut provoquer l'éjection d'une partie ou de la totalité de la structure d'habillage hors de l'ouverture. Ce phénomène peut être accru lorsque la déformation de la paroi de garniture est provoquée par le déploiement brusque d'un coussin gonflable (air-bag). Afin d'éviter l'éjection de tout ou partie de la structure d'habillage, il est possible de coller tout ou partie de la structure d'habillage sur la face non visible de la paroi de garniture. Cette solution présente l'inconvénient d'être couteuse et peut présenter un taux de rebut significatif, le collage étant généralement réalisé manuellement. En outre, ce collage peut ne pas suffire à éviter l'éjection de la totalité la structure d'habillage ou de parties fragmentées de celle-ci.

Il existe donc un besoin pour un assemblage d'une structure d'habillage à une ouverture de paroi de garniture qui soit efficace, même en cas de déformation de la paroi de garniture, notamment résultant d'un choc et/ou du déploiement d'un air-bag.

Le document JP 2003 090311 A décrit un assemblage d'une structure d'habillage à une ouverture de paroi de garniture selon le préambule de la revendication 1.

A cet effet, l'objet de l'invention concerne un assemblage d'une structure d'habillage à une ouverture de paroi de garniture, cette paroi de garniture présentant une face cachée et une face opposée visible, la structure d'habillage comprenant un élément de retenue situé du côté de la face cachée en appui contre celle-ci et un élément d'habillage situé en partie du côté de la face visible solidarisé à l'élément de retenue, l'élément d'habillage présentant un rebord externe encadrant l'ouverture et en appui contre la face visible, un rebord interne traversant l'ouverture et coopérant avec l'élément de retenue du côté de la face cachée, le rebord interne définissant un cadre dont deux côtés opposés sont prolongés par des portions de paroi suivant une direction sensiblement perpendiculaire à la paroi de garniture, un barreau s'étendant le long d'un autre côté du rebord interne, à distance de ce dernier, reliant des extrémités desdites portions de paroi.

Selon l'invention, l'élément de retenue comprend :
- un cadre en forme de U comprenant deux bras opposés reliés à une de leurs extrémités par un bras de liaison, ledit cadre en forme de U étant disposé autour du rebord interne de l'élément d'habillage, en coopération avec ce dernier, ce cadre étant suffisamment grand pour ne pas traverser l'ouverture,
- une patte de retenue en forme de M, comportant deux bras dont une extrémité est reliée à l'un des bras opposés du cadre en forme de U, à distance du bras de liaison de ce dernier et à proximité dudit barreau, ces bras étant reliés à leur autre extrémité par une partie médiane, ces bras s'étendant dans un même plan sensiblement parallèle à la paroi de garniture et passant entre le barreau et le côté du rebord interne le long duquel s'étend le barreau, et la partie médiane s'étendant dans un plan incliné par rapport au plan des bras et étant située au moins partiellement en regard d'une face externe du barreau de l'élément d'habillage, à une distance prédéterminée de celle-ci.

Du fait de l'agencement particulier de la patte de retenue et du barreau de l'élément d'habillage, lors d'un choc entrainant l'élément d'habillage en dehors de l'ouverture du côté de la face visible, le barreau de l'élément d'habillage va venir buter contre la partie médiane de la patte de retenue, laquelle va glisser contre le barreau provoquant le basculement de l'élément d'habillage autour de ce barreau, le reste de l'élément d'habillage n'étant pas retenu par l'élément de retenue. Ce basculement ou rotation va provoquer l'insertion du barreau de l'élément d'habillage dans le creux en V formé entre la partie médiane et les bras de la patte de retenue. On obtient ainsi l'accrochage de l'élément d'habillage et on évite son éjection complète hors de l'ouverture de la paroi de pavillon.

La partie médiane de la patte de retenue est située au moins partiellement en regard d'une face externe du barreau. Notamment, cette partie médiane et la face externe sont en regard sur une distance prédéterminée non nulle, par exemple d'au moins 1mm et de préférence de 1 à 5mm.

La partie médiane de la patte de retenue est en outre à une distance prédéterminée de la face externe du barreau. Avantageusement, cette distance prédéterminée est la plus faible possible, mais de préférence suffisamment grande pour assurer un montage de l'élément de retenue et de l'élément d'habillage. On pourrait néanmoins envisager que cette distance soit nulle (la partie médiane est alors en appui contre le barreau).

Avantageusement, quelque soit le mode de réalisation, la patte de retenue peut ainsi être conformée pour, sous l'effet d'une contrainte externe, subir une déformation réversible vers un état déformé, dans lequel sa partie médiane s'étend sensiblement dans le même plan que ses bras. A cet effet, l'homme du métier pourra choisir par exemple un matériau adapté et/ou une inclinaison particulière de la partie médiane. Alternativement ou en combinaison, l'espace séparant le barreau et le côté du rebord interne le long duquel le barreau s'étend, peut être choisi suffisamment grand pour laisser passer la patte de retenue dans un tel état déformé.

Avantageusement, l'élément de retenue peut en outre comprendre une nervure de rigidification reliant les bras de la patte de retenue du côté de leur extrémité reliée au cadre en forme de U.

La présence de la nervure de rigidification permet de limiter davantage l'ouverture du cadre en forme de U (l'écartement des bras opposés du U) en cas de choc, ce qui pourrait avoir pour effet de libérer le rebord interne de l'élément d'habillage du cadre en forme de U de l'élément de retenue. L'augmentation de la rigidité du cadre en forme de U résultant de la présence de la nervure de rigidification permet ainsi d'améliorer le maintien de l'élément d'habillage par l'élément de retenue.

L'assemblage selon l'invention peut en outre comporter une ou plusieurs des caractéristiques suivantes :
- la partie médiane de la patte de retenue présente une partie plane située au moins partiellement en regard de la face externe du barreau de l'élément d'habillage. Ceci peut favoriser le basculement de l'élément d'habillage autour du barreau et par conséquent son accrochage au moyen de la patte de retenue.
- La partie médiane de la patte de retenue est située au moins partiellement en regard d'une partie convexe du barreau de l'élément d'habillage. Cet agencement peut permettre une absorption partielle du choc par le barreau.
- La patte de retenue en forme de M est telle que le plan de la partie médiane définit avec le plan des bras un angle compris de 10 à 45°, de préférence de 10 à 30°. Un tel agencement peut faciliter l'insertion du barreau entre la partie médiane et les bras de la patte de retenue lors du basculement de l'élément d'habillage.
- Les bras de la patte de retenue sont reliés au cadre en forme de U par des pattes de liaison sensiblement parallèles au barreau. En particulier, chaque patte de liaison peut comprendre un logement recevant une portion de paroi du rebord interne. Ces logements peuvent guider le basculement de l'élément d'habillage par rapport à l'élément de retenue, favorisant la retenue de l'élément d'habillage.
- Le rebord interne de l'élément d'habillage présente, le long de ses côtés prolongés par les portions de paroi, sur des faces en regard de ces côtés, deux pattes allongées s'étendant sensiblement perpendiculairement au barreau, et faisant saillie hors de l'élément d'habillage d'un même côté de celui-ci en traversant l'espace séparant le barreau du côté du rebord interne le long duquel il s'étend. De telles pattes peuvent également favoriser le basculement de l'élément d'habillage autour de la nervure de rigidification.
- L'élément d'habillage présente un volet obturant l'ouverture de la paroi de garniture. Un tel volet peut en outre être conformé pour coopérer avec un organe, par exemple un crochet ou autre. Avantageusement, ce volet peut être monté coulissant sur l'élément d'habillage, par exemple guidé par les pattes allongées précédemment mentionnées, ce qui peut permettre d'accéder à l'ouverture ou de changer le volet.
- L'élément de retenue est réalisé d'une pièce en matériau polymère, par exemple par moulage.

La paroi de garniture de l'assemblage selon l'invention peut être une paroi de pavillon de véhicule automobile ou encore une paroi de garniture faisant partie d'un habitacle de véhicule lequel peut être terrestre, aérien ou autre.

L'invention concerne également un véhicule, notamment terrestre ou aérien, comprenant un assemblage selon l'invention. En particulier, cet assemblage peut concerner une paroi de garniture d'un habitacle de ce véhicule.

L'invention est maintenant décrite en référence aux dessins annexés, non limitatifs, dans lesquels :
- la figure 1 représente une vue en perspective partielle d'un assemblage d'une structure d'habillage à une ouverture de paroi de garniture selon un mode de réalisation de l'invention, la paroi étant dans un état non déformé ;
- la figure 2 est une vue similaire à la figure 1, la paroi étant dans un état déformé ;
- la figure 3 est une vue de l'assemblage représenté sur les figures 1 et 2, du côté de la face cachée de la paroi de garniture ;
- la figure 4 est une représentation en perspective de l'élément de retenue de la structure d'assemblage représentée sur les figures 1 à 3 ;
- la figure 5 est une représentation en perspective d'un autre mode de réalisation selon l'invention d'un élément de retenue d'une structure d'assemblage ;
- la figure 6 est une vue en perspective de l'élément d'habillage de la structure d'assemblage représentée sur les figures 1 à 4, le volet étant ôté ;
- la figure 7 représente une vue en perspective d'un volet coopérant avant l'élément d'habillage représenté figure 6 ;
- la figure 8 est une vue en coupe suivant la ligne A-A de la figure 3.

Par sensiblement parallèle ou perpendiculaire, on entend une direction s'écartant d'au plus ±20°, voire d'au plus 10° ou d'au plus 5° d'une direction parallèle ou perpendiculaire.

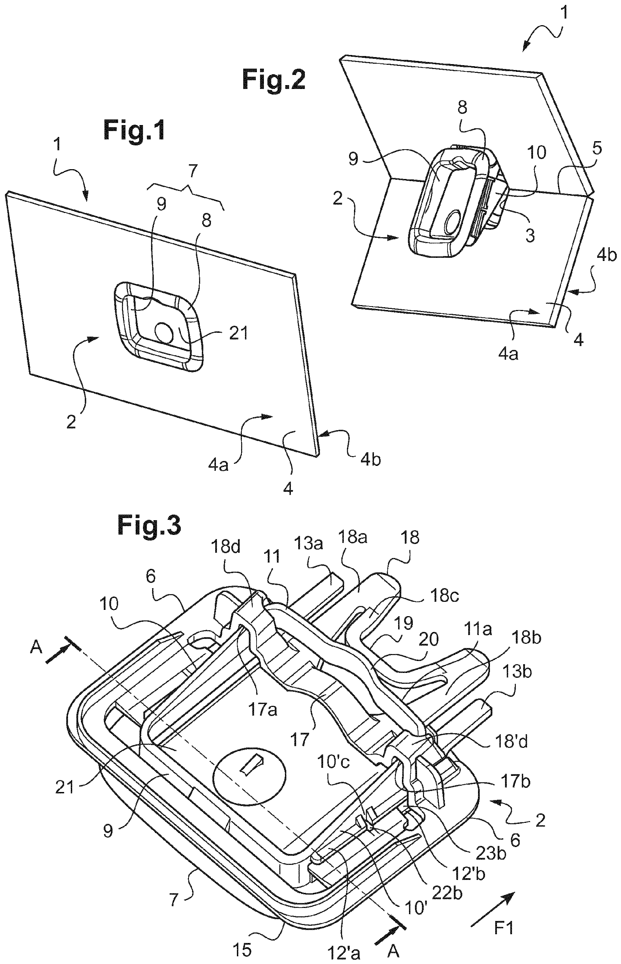

Les figures 1 et 2 représentent un assemblage 1 d'une structure d'habillage 2 à une ouverture 3 de paroi de garniture 4. Sur la figure 1, la paroi de garniture 4 est sensiblement plane, au moins à proximité immédiate de l'ouverture 3, et dans un état non déformé. Il s'agit de son état d'utilisation habituelle. Sur la figure 2, cette paroi 4 est déformée, ici par pliage le long de la ligne 5. Cette paroi de garniture 4 est destinée à faire partie de l'habitacle d'un véhicule terrestre ou aérien, notamment d'un véhicule automobile.

La paroi de garniture 4 présente ainsi une face 4a visible des occupants de l'habitacle et une face opposée 4b cachée aux occupants.

La structure d'habillage 2 comprend un élément de retenue 6 situé du côté de la face cachée 4b de la paroi de garniture 4 et un élément d'habillage 7 situé en partie du côté de la face visible 4a de la paroi de garniture 4. L'élément de retenue 6, visible sur les figures 3 à 5 et 8, est en appui contre la face cachée 4b.

L'élément d'habillage 7 est solidarisé à l'élément de retenue 6, de préférence de manière non définitive. Quelque soit la forme de l'élément d'habillage 7 et de l'élément de retenue 6, cette solidarisation peut être obtenue par coopération, notamment par coopération de parties complémentaires, par exemple par clippage, emboitement, notamment par coulissement, combinaison des deux ou autre.

L'élément d'habillage 7 présente un rebord externe 8 qui encadre l'ouverture 3, notamment entièrement, et est en appui contre la face visible 4a de la paroi de garniture 4 (figures 1, 2, 8). L'élément d'habillage 7 comprend en outre un rebord interne 9 qui traverse l'ouverture 3 et coopère avec l'élément de retenue 6 du côté de la face cachée 4b.

Dans l'exemple représenté, le rebord interne 9 forme une paroi qui s'étend sensiblement perpendiculairement à la paroi de garniture 4 lorsque celle-ci est non déformée, depuis le rebord externe 8 au travers de l'ouverture 3. On notera ainsi que le cadre défini par le rebord interne 9 présente ici des dimensions correspondant sensiblement aux dimensions de l'ouverture 3. Le rebord interne 9 forme ici un cadre à quatre côtés 9a, 9b, 9c, 9d, opposés deux à deux.

Le rebord interne 9 est prolongé sur deux de ses côtés opposés 9a, 9b, suivant une direction sensiblement perpendiculaire à la paroi de garniture 4, par deux portions de parois 10 et 10'. Ces portions de paroi 10, 10' s'étendent ainsi sensiblement perpendiculairement à la face cachée 4b, en s'éloignant de celle-ci.

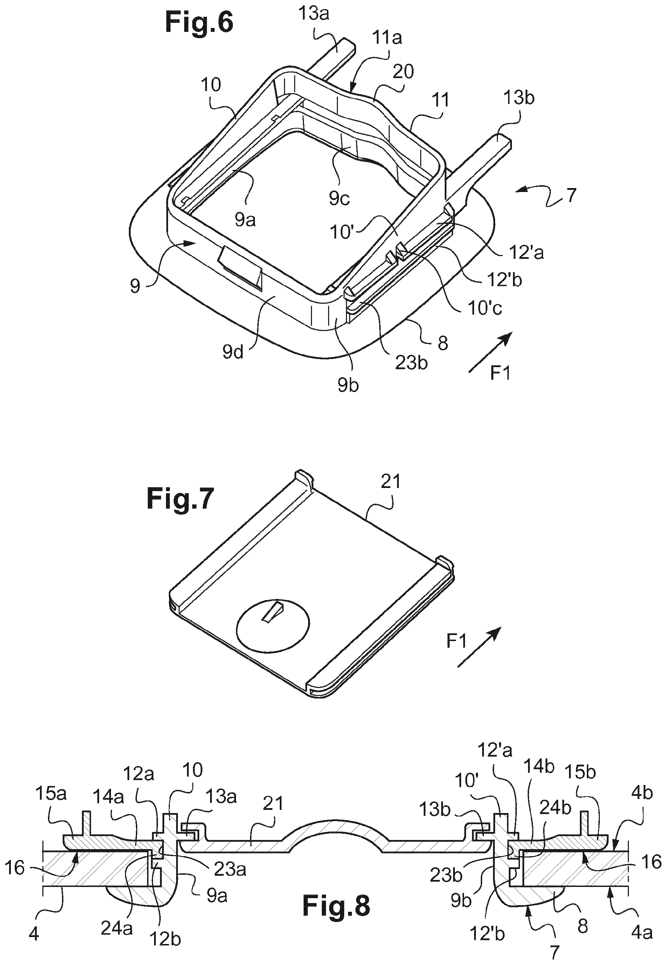

Dans le mode de réalisation représenté, chaque côté 9a, 9b prolongé par une portion de paroi 10, 10', présente deux nervures 12a, 12b/ 12'a, 12'b et définissant entre elles une rainure 23a, 23b pouvant recevoir une languette solidaire de l'élément de retenue 6 (fig.3, 8). Ces nervures 12a, 12b /12'a, 12'b sont disposées sur les faces des côtés 9a, 9b qui ne sont pas en regard.

Dans l'exemple, on notera que les nervures 12a, 12b/12'a, 12'b d'une même paire ne sont pas parallèles mais convergentes, chaque nervure étant par ailleurs rectiligne. Cette convergence est observée dans une direction d'insertion de l'élément de retenue dans l'élément d'habillage qui sera décrite plus loin, symbolisée par la flèche F1 sur les figures 3, 4 à 7. En outre, dans l'exemple, une nervure 12a, 12'a de chaque paire de nervures (ici la nervure la plus éloignée de la face cachée 4b) présente une interruption ou échancrure 10c, 10'c recevant un ergot 22a, 22b correspondant, solidaire de l'élément de retenue 6. Les ergots 22a, 22b peuvent permettre l'indexation de l'élément de retenue 6 et de l'élément d'habillage 7 suivant la direction d'insertion F1.

Les deux portions de parois 10, 10' du rebord interne 9 sont reliées à une de leurs extrémités par un barreau 11, distinct du rebord interne 9. Ce barreau 11 s'étend le long du côté 9c du rebord interne, à distance de ce dernier. Seules les extrémités du barreau 11 sont reliées aux portions de parois 10, 10'. Autrement dit, un espace libre est formé entre le barreau 11 et le côté 9c du rebord interne 9 lorsque la structure d'habillage 2 est montée (fig. 3, 6). A noter que le barreau 11 s'étend ici sensiblement au dessus du côté 9c. Dans l'exemple, les portions de paroi 10, 10' présentent chacune une forme sensiblement triangulaire. Les parties les plus hautes des deux portions de paroi 10, 10' (suivant une direction perpendiculaire à la face cachée 4b) sont reliées par le barreau 11.

Dans le mode de réalisation particulier représenté sur les figures, l'élément d'habillage 7 présente en outre deux pattes allongées 13a, 13b situées de part et d'autre de l'élément d'habillage 7, du côté de la face cachée 4b de la paroi de garniture, s'étendant sensiblement parallèlement à celle-ci (fig.3, 6, 8). Ces pattes allongées 13a, 13b s'étendent sensiblement perpendiculairement au barreau 11, le long des faces en regard des côtés 9a, 9b prolongés par les portions de paroi 10, 10' et font saillie d'un même côté de l'élément d'habillage 7, via l'espace séparant le rebord interne 9 (le côté 9c) et le barreau 11. Ces pattes allongées 13a, 13b s'étendent ici sur toute la longueur des côtés 9a, 9b respectivement. Les pattes allongées 13a, 13b s'étendent ainsi sensiblement parallèlement à la face d'envers 4b de la garniture d'habillage 4, avec un jeu réduit, ce qui permet un pré-clippage de l'élément d'habillage 7 sur la garniture 4, avant le montage de l'élément de retenue 6.

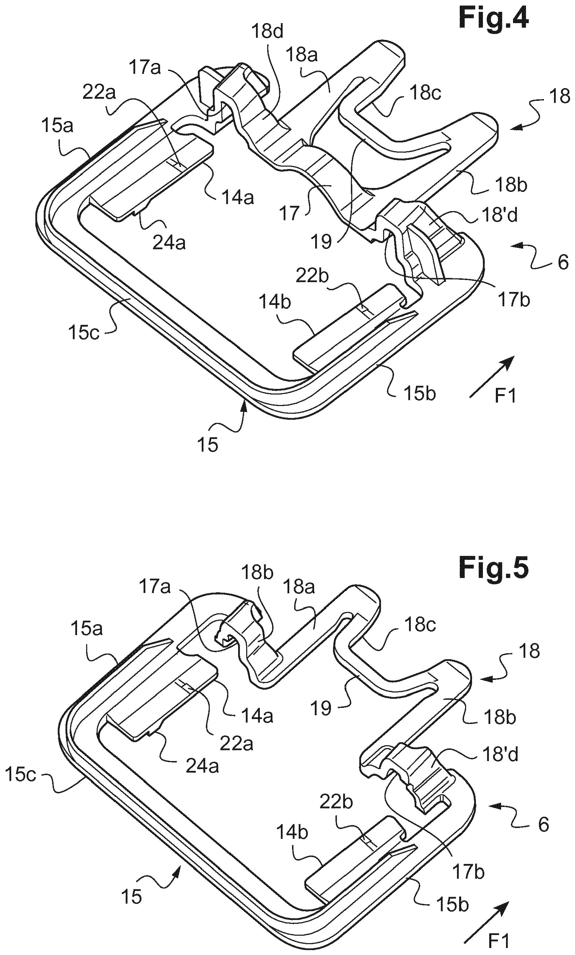

L'élément de retenue 6 est décrit notamment en référence aux figures 4 et 5. A noter que les modes de réalisation de ces deux figures ne varient que par la présence/absence d'une nervure de rigidification 17. Les autres éléments représentés sont identiques et sont désignés par les mêmes références.

L'élément de retenue 6 comprend un cadre 15 en forme de U suffisamment grand pour ne pas traverser l'ouverture 3. Ce cadre 15 est disposé autour du rebord interne 9 de l'élément d'habillage 7. Le cadre 15 coopère en outre avec le rebord interne 9 de l'élément d'habillage 7 pour maintenir ce dernier en position.

Le cadre 15 comprend deux bras opposés 15a, 15b reliés à une de leurs extrémités par un bras de liaison 15c.

Le cadre 15 comprend deux bras opposés 15a, 15b reliés à une de leurs extrémités par un bras de liaison 15c.

Le cadre 15 présente ici une face d'appui 16 sensiblement plane et venant en appui contre la face cachée 4b de la paroi de garniture, autour de l'ouverture 3.

Ici, le cadre 15 est en outre pourvu de languettes 14a, 14b situées en regard l'une de l'autre et agencées de manière à coopérer avec les nervures 12a, 12b, respectivement 12'a, 12'b des côtés 9a, 9b prolongés par les portions de paroi 10, 10'.

Les languettes 14a et 14b peuvent présenter une épaisseur réduite afin de former des lames ressort. Leur épaisseur peut ainsi définir l'effort de désolidarisation des deux pièces 6 et 7. A titre d'exemple, cette épaisseur peut être de 0,8 à 2,2 mm suivant la largeur des languettes, de préférence ici 1,2 mm.

Les languettes 14a, 14b forment ainsi des liaisons programmables et débrayables entre les pièces 6 et 7. Ces liaisons peuvent permettre de libérer l'énergie des contraintes subies lors du déploiement de l'airbag et d'éviter ainsi la casse d'une des deux pièces. La matière utilisée pour les languettes est de préférence un polymère, par exemple choisi parmi le polyoxyméthylène (POM) et polyamide (PA), notamment un polymère modifié, par exemple chargé en fibres de verre ou autres, présentant une bonne résistance aux chocs. Cette solution présente une utilité particulière lors des déploiements d'airbag sous des températures très basses (- 20 à - 30°C).

Les languettes 14a, 14b et les nervures associées forment des éléments de mise en prise assurant une solidarisation réversible de l'élément d'habillage 7 et de l'élément de retenue 6. L'invention n'est toutefois pas limitée à des éléments de mise en prise particuliers.

On notera en outre que dans l'exemple représenté, le bord libre des languettes 14a, 14b, inséré entre les nervures, présente une surépaisseur ou talon 24a, 24b permettant de compenser la différence d'épaisseur entre l'espace 23a, 23b séparant les nervures et l'épaisseur ajustable des languettes 14a et 14b. Ces talons 24a, 24b peuvent participer au calage anti vibratoire entre les pièces 6 et 7 au niveau de la liaison avec les languettes 14a et 14b.

L'élément de retenue 6 comprend une patte de retenue 18 en forme de M, comportant deux bras 18a, 18b et une partie médiane 18c. Une extrémité de chaque bras 18a, 18b est reliée à l'un 15a, 15b des bras opposés du cadre en forme de U 15, à distance du bras de liaison 15c du cadre 15 et à proximité du barreau 11. L'autre extrémité de chaque bras 18a, 18b est solidaire de la partie médiane 18c. Les bras 18a, 18b s'étendent dans un même plan sensiblement parallèle à la paroi de garniture 4, et passent entre le barreau 11 et le côté 9c du rebord interne. A cet effet, l'espace séparant le barreau 11 et le côté 9c est suffisamment grand. La partie médiane 18c s'étend dans un plan incliné par rapport au plan des bras 18a, 18b et est située au moins partiellement en regard du barreau 11 de l'élément d'habillage, notamment en regard d'une face 11a de celui-ci externe au rebord interne 9 de l'élément d'habillage (fig.3).

La partie médiane 18c de la patte de retenue 18 présente ici une partie plane 19 située au moins partiellement en regard du barreau 11 de l'élément d'habillage. Ici, la partie médiane 18c de la patte de retenue, plus précisément sa partie plane 19, est située au moins partiellement en regard d'une partie convexe 20 du barreau 11 (Fig.3), dont la convexité est dirigée vers l'extérieur du rebord interne 9.

De préférence, la partie médiane 18c est située en regard du barreau 11 sur une hauteur du barreau 11 (suivant une direction perpendiculaire à la paroi de garniture 4) d'au minimum 1 mm, par exemple de 1 à 5mm.

Dans les exemples, on note que des pattes de liaison 18d, 18'd relient les bras 18a, 18a aux côtés 15a, 15b, respectivement, du cadre 15. Ces pattes de liaison 18d, 18'd s'étendent ici sensiblement parallèlement au barreau 11, et donc aussi au bras de liaison 15c.

La patte de retenue 18 en forme de M est telle que le plan de la partie médiane 18c définit avec le plan des bras 18a, 18b un angle compris de 10 à 45°, de préférence de 10 à 30°, plus préférentiellement de 10 à 20°, par exemple de 15°. La présente invention n'est toutefois pas limitée par un angle particulier pourvu que la partie médiane 18c soit au moins partiellement en regard du barreau 11 de l'élément d'habillage, et de préférence sur une hauteur d'au moins 1mm, lorsque l'élément d'habillage 7 est solidarisé à l'élément de retenue 6. De préférence, cet angle et/ou le matériau de la patte de retenue 18 sera choisi pour permettre une déformation réversible de celle-ci vers un état déformé dans lequel sa partie médiane s'étend sensiblement dans le même plan que ses bras, facilitant ainsi le montage de l'élément de retenue et de l'élément d'habillage.

Dans le mode de réalisation des figures 3 et 4, l'élément de retenue 6 comprend en outre une nervure de rigidification 17 reliant les bras 18a, 18b de la patte de retenue 18 du côté de leur extrémité reliée au cadre en forme de U 15. Dans l'exemple, la nervure de rigidification 17 relie les pattes de liaison 18d, 18'd, sensiblement parallèlement au barreau 11, à proximité de celui-ci. Elle s'étend ici à distance de la face d'appui 16, en regard d'une ouverture définie par le rebord interne 9 de l'élément d'habillage (voir figure 3).

Cette nervure de rigidification 17 s'étend ainsi, via les pattes de liaison 18d, 18'd, entre les extrémités libres du cadre 15 (figures 3, 4). Elle permet de limiter l'écartement des bras 15a, 15b du cadre 15, déjà reliés par la patte de retenue en M.

Cette nervure de rigidification peut être omise, tel que visible sur la figure 5.

Dans les exemples représentés, les pattes de liaison 18d, 18'd de la patte de retenue 18 comprennent chacune un logement 17a, 17b recevant une portion de paroi 10, 10', respectivement, du rebord interne 9. Ces logements 17a, 17b sont donc ouverts en direction de la face cachée 4b de la paroi de garniture 4. Ils sont disposés de part et d'autre de la patte de retenue 18.

On notera que les extrémités des bras 18a, 18b de la patte de retenue 18 reliées au cadre en U 15 via les pattes de liaison 18d, 18'd peuvent présenter une section transversale de dimension supérieure à la section transversale des extrémités de ces bras solidaires de la partie médiane 18c (fig.3-5), ce qui permet d'améliorer la robustesse de la patte de retenue 18.

Dans l'exemple représenté, l'élément d'habillage 7 présente également un volet 21 obturant l'ouverture définie par le rebord interne 9, et par conséquent l'ouverture 3 de la paroi de garniture 4. Ce volet 21 est monté coulissant du côté de la face cachée 4b, le long des pattes allongées 13a, 13b suivant la direction longitudinale de ces pattes allongées 13a, 13b qui lui servent de rails de guidage (voir Fig. 8). Le volet 21 passe par ailleurs entre le cadre défini par le rebord interne 9 et la patte de retenue 18. Autrement dit, ce volet 21 est monté sur le rebord interne 9 et peut coulisser en traversant l'espace séparant le barreau 11 du côté 9c du rebord interne 9. Un tel volet est optionnel.

Le montage de la structure d'habillage 2 peut être réalisé de la manière suivante. L'élément d'habillage 7 est appliqué contre la face visible 4a de la paroi de garniture 4, son rebord interne 9 traversant l'ouverture 3. L'élément de retenue 6 est alors mis en place du côté de la face cachée 4b par une translation suivant la direction d'insertion F1 des bras 15a et 15b, les languettes 14a, 14b coopérant avec les nervures 12a, 12b et 12'a 12'b du rebord interne. Dans le même mouvement, la patte de retenue 18 passe en se déformant au travers de l'espace séparant le barreau 11 et le rebord interne 9 et vient, en retrouvant sa forme initiale, partiellement en regard de la partie 20 du barreau 11. Dans le même mouvement, les ergots 22a et 22b coopérant avec les échancrures 10c, 10'c, donnent la position finale de l'assemblage. L'assemblage obtenu est alors tel que représenté sur les figures 1 et 3.

En cas de choc entrainant une déformation de la paroi de garniture 4, par exemple par pliage le long de la ligne 5, tel que représenté sur la figure 2, l'élément d'habillage 7 peut se désolidariser partiellement de l'élément de retenue 6, libérant ainsi le trop plein d'énergie qui pourrait casser les pièces, tout en maintenant les pièces 7, 21 et 6 étroitement liées avec la garniture d'habillage 4. L'élément d'habillage 7 bascule alors autour d'un axe sensiblement confondu avec le barreau 11. On notera que les logements 17a, 17b servent alors de guides pour les portions de paroi 10, 10' de l'élément d'habillage, facilitant la rotation de celui-ci autour de son barreau 11. Le barreau 11, initialement en regard d'une partie de la partie médiane 18c de la patte de retenue en M entre alors en contact avec celle-ci, puis glisse entre la partie médiane 18c et les bras 18a, 18b de la patte de retenue 18 et se retrouve bloqué entre les deux, maintenant ainsi l'élément d'habillage 7 accroché à l'élément de retenue 6. Dans cette position, on observe une déformation notable du barreau 11 et de la patte de retenue 18.

Ces deux parties ainsi déformées créent un verrouillage fort empêchant l'éjection d'une ou des parties restées liées à la garniture d'habillage 4, tout en gardant une souplesse de rotation entre les parties 6 et 7, permettant à la garniture 4 de se plier et de se déformer sous la poussée de l'airbag, sans impacter les pièces 6,7 et 21.

L'assemblage selon l'invention présente l'avantage d'être facile à mettre en oeuvre et peu coûteux. En outre, l'assemblage ne nécessite pas de collage de sorte que le positionnement de la structure d'habillage est indépendant de son montage. Par ailleurs, quelque soit la déformation de la paroi de garniture, l'élément d'habillage reste accroché à celle-ci grâce à la mise en prise de l'élément d'habillage et de la patte de retenue en M de l'élément de retenue. La structure devient alors flexible et flottante mais reste liée à la paroi, l'élément de retenue restant bloqué du côté de la face cachée. La forme en M de la patte de retenue permet ainsi de créer un système d'accrochage souple mais robuste. L'élément de retenue pourra notamment être avantageusement réalisé d'une seule pièce en matériau polymère, notamment choisi parmi les polymères précédemment cités.

## Revendications

1. Assemblage (1) d'une structure d'habillage (2) à une ouverture (3) de paroi de garniture (4), cette paroi de garniture présentant une face cachée (4b) et une face opposée visible (4a), la structure d'habillage comprenant un élément de retenue (6) situé du côté de la face cachée en appui contre celle-ci et un élément d'habillage (7) situé en partie du côté de la face visible et solidarisé à l'élément de retenue (6), l'élément d'habillage (7) présentant un rebord externe (8) encadrant l'ouverture (3) et en appui contre la face visible (4a), un rebord interne (9) traversant l'ouverture (3) et coopérant avec l'élément de retenue (6) du côté de la face cachée (4b), **caractérisé en ce que** le rebord interne définit un cadre dont deux côtés opposés (9a, 9b) sont prolongés par des portions de paroi (10, 10') suivant une direction sensiblement perpendiculaire à la paroi de garniture (4), un barreau (11) s'étendant le long d'un autre côté (9c) du rebord interne (9), à distance de ce dernier, reliant des extrémités desdites portions de paroi, l'élément de retenue (6) comprenant :
- un cadre (15) en forme de U comprenant deux bras opposés (15a, 15b) reliés à une de leurs extrémités par un bras de liaison (15c), ledit cadre (15) en forme de U étant disposé autour du rebord interne (9) de l'élément d'habillage, en coopération avec ce dernier, le cadre (15) étant suffisamment grand pour ne pas traverser l'ouverture (3),
- une patte de retenue (18) en forme de M, comportant deux bras (18a, 18b) dont une extrémité est reliée à l'un des bras opposés (15a, 15b) du cadre en forme de U (15), à distance du bras de liaison (15c) de ce dernier et à proximité dudit barreau (11), ces bras (18a, 18b) étant reliés à leur autre extrémité par une partie médiane (18c), ces bras (18a, 18b) s'étendant dans un même plan sensiblement parallèle à la paroi de garniture et passant entre le barreau (11) et le côté (9c) du rebord interne le long duquel s'étend le barreau (11), et la partie médiane (18c) s'étendant dans un plan incliné par rapport au plan des bras (18a, 18b) et étant située au moins partiellement en regard d'une face externe du barreau (11) de l'élément d'habillage, à une distance prédéterminée de celle-ci.

2. Assemblage (1) selon la revendication 1, **caractérisé en ce que** l'élément de retenue (6) comprend en outre une nervure de rigidification (17) reliant les bras (18a, 18b) de la patte de retenue (18) du côté de leur extrémité reliée au cadre en forme de U.

3. Assemblage (1) selon la revendication 1 ou 2, **caractérisé en ce que** la partie médiane (18c) de la patte de retenue (18) présente une partie plane (19) située au moins partiellement en regard de la face externe du barreau (11) de l'élément d'habillage.

4. Assemblage (1) selon l'une quelconque des revendications 1 à 3, **caractérisé en ce que** la partie médiane (18c) de la patte de retenue (18) est située au moins partiellement en regard d'une partie convexe (20) du barreau (11) de l'élément d'habillage.

5. Assemblage (1) selon l'une quelconque des revendications 1 à 4, **caractérisé en ce que** la patte de retenue (18) est telle que le plan de la partie médiane (18c) définit avec le plan des bras (18a, 18b) un angle compris de 10 à 45°.

6. Assemblage (1) selon l'une quelconque des revendications 1 à 5, **caractérisé en ce que** les bras (18a, 18b) de la patte de retenue sont reliés au cadre en forme de U (15) par des pattes de liaison (18d, 18'd) sensiblement parallèles au barreau (11) et comprenant chacune un logement (17a, 17b) recevant les portions de paroi (10, 10') prolongeant le rebord interne (9) de l'élément d'habillage.

7. Assemblage (1) selon l'une quelconque des revendications 1 à 6, **caractérisé en ce que** le rebord interne (9) de l'élément d'habillage (7) présente, le long de ses côtés prolongés par les portions de paroi (10, 10'), sur des faces en regard de ces côtés, deux pattes allongées (13a, 13b) s'étendant sensiblement perpendiculairement au barreau (11), et faisant saillie hors de l'élément d'habillage (7) d'un même côté de celui-ci en traversant l'espace séparant le barreau (11) du côté du rebord interne le long duquel il s'étend..

8. Assemblage (1) selon l'une quelconque des revendications 1 à 7, **caractérisé en ce que** l'élément d'habillage (7) présente un volet (21) obturant l'ouverture (3) de la paroi de garniture.

9. Assemblage (1) selon l'une quelconque des revendications 1 à 8, **caractérisé en ce que** l'élément de retenue (6) est réalisé d'une pièce en matériau polymère.

10. Véhicule comprenant un assemblage (1) selon l'une quelconque des revendications 1 à 9.

## Patentansprüche

1. Montage (1) einer Verkleidungsstruktur (2) an einer Öffnung (3) einer Einlagewand (4), wobei diese Einlagewand eine verdeckte Fläche (4b) und eine gegenüberliegende sichtbare Fläche (4a) aufweist, wobei die Verkleidungsstruktur ein Halteelement (6), das sich auf der Seite der verdeckten Fläche befindet und an dieser anliegt, und ein Verkleidungselement (7), das sich teilweise auf der Seite der sichtbaren Fläche befindet und mit dem Halteelement (6) fest verbunden ist, umfasst, wobei das Verkleidungselement (7) einen äußeren Rand (8) aufweist, der die Öffnung (3) umrahmt und an der sichtbaren Fläche (4a) anliegt, und einen inneren Rand (9), der die Öffnung (3) durchquert und mit dem Halteelement (6) auf der Seite der verdeckten Fläche (4b) zusammenwirkt, wobei der innere Rand einen Rahmen definiert, von dem zwei gegenüberliegende Seiten (9a, 9b) durch Wandabschnitte (10, 10') in einer im Wesentlichen zur Einlagewand (4) senkrechten Richtung verlängert sind, wobei eine Stange (11) sich entlang einer anderen Seite (9c) des inneren Randes (9), in einem Abstand von diesem Letzteren, erstreckt, wobei sie Enden der Wandabschnitte verbindet, **dadurch gekennzeichnet, dass** das Halteelement (6) umfasst:
- einen U-förmigen Rahmen (15), der zwei gegenüberliegende Schenkel (15a, 15b) umfasst, die an einem ihrer Enden durch einen Verbindungsarm (15c) verbunden sind, wobei der U-förmige Rahmen (15) um den inneren Rand (9) des Verkleidungselements herum angeordnet ist und mit diesem Letzteren zusammenwirkt, wobei der Rahmen (15) ausreichend groß ist, um nicht durch die Öffnung (3) zu passen,
- eine M-förmige Haltelasche (18), die zwei Schenkel (18a, 18b) aufweist, von denen ein Ende mit einem der gegenüberliegenden Schenkel (15a, 15b) des U-förmigen Rahmens (15) verbunden ist, in einem Abstand von dem Verbindungsarm (15c) dieses Letzteren und in der Nähe der Stange (11), wobei diese Schenkel (18a, 18b) an ihrem anderen Ende durch einen mittleren Teil (18c) verbunden sind, wobei sich diese Schenkel (18a, 18b) in ein und derselben Ebene erstrecken, die im Wesentlichen parallel zur Einlagewand ist und zwischen der Stange (11) und der Seite (9c) des inneren Randes, entlang welcher sich die Stange (11) erstreckt, verläuft, und wobei sich der mittlere Teil (18c) in einer Ebene erstreckt, die bezüglich der Ebene der Schenkel (18a, 18b) geneigt ist, und sich wenigstens teilweise gegenüber einer äußeren Fläche der Stange (11) des Verkleidungselements befindet, in einem vorbestimmten Abstand von dieser.

2. Montage (1) nach Anspruch 1, **dadurch gekennzeichnet, dass** das Halteelement (6) außerdem eine Versteifungsrippe (17) umfasst, welche die Schenkel (18a, 18b) der Haltelasche (18) auf der Seite von deren mit dem U-förmigen Rahmen verbundenen Ende verbindet.

3. Montage (1) nach Anspruch 1 oder 2, **dadurch gekennzeichnet, dass** der mittlere Teil (18c) der Haltelasche (18) einen ebenen Teil (19) aufweist, der sich wenigstens teilweise gegenüber der äußeren Fläche der Stange (11) des Verkleidungselements befindet.

4. Montage (1) nach einem der Ansprüche 1 bis 3, **dadurch gekennzeichnet, dass** sich der mittlere Teil (18c) der Haltelasche (18) wenigstens teilweise gegenüber einem konvexen Teil (20) der Stange (11) des Verkleidungselements befindet.

5. Montage (1) nach einem der Ansprüche 1 bis 4, **dadurch gekennzeichnet, dass** die Haltelasche (18) so beschaffen ist, dass die Ebene des mittleren Teils (18c) mit der Ebene der Schenkel (18a, 18b) einen Winkel zwischen 10 und 45° bildet.

6. Montage (1) nach einem der Ansprüche 1 bis 5, **dadurch gekennzeichnet, dass** die Schenkel (18a, 18b) der Haltelasche mit dem U-förmigen Rahmen (15) durch Verbindungslaschen (18d, 18'd) verbunden sind, die im Wesentlichen parallel zu der Stange (11) sind und jeweils eine Aufnahme (17a, 17b) umfassen, welche die Wandabschnitte (10, 10') aufnimmt, die den inneren Rand (9) des Verkleidungselements verlängern.

7. Montage (1) nach einem der Ansprüche 1 bis 6, **dadurch gekennzeichnet, dass** der innere Rand (9) des Verkleidungselements (7) entlang seiner durch die Wandabschnitte (10, 10') verlängerten Seiten, auf Flächen, die diesen Seiten gegenüberliegen, zwei lang gestreckte Laschen (13a, 13b) aufweist, die sich im Wesentlichen senkrecht zu der Stange (11) erstrecken und aus dem Verkleidungselement (7) auf derselben Seite desselben herausragen, wobei sie den Raum durchqueren, der die Stange (11) von der Seite des inneren Randes trennt, entlang der sie sich erstreckt.

8. Montage (1) nach einem der Ansprüche 1 bis 7, **dadurch gekennzeichnet, dass** das Verkleidungselement (7) eine Klappe (21) aufweist, welche die Öffnung (3) der Einlagewand verschließt.

9. Montage (1) nach einem der Ansprüche 1 bis 8, **dadurch gekennzeichnet, dass** das Halteelement (6) einstückig aus Polymermaterial hergestellt ist.

10. Fahrzeug, welches eine Montage (1) nach einem der Ansprüche 1 bis 9 umfasst.

## Claims

1. Assembly (1) of a lining structure (2) for an opening (3) in a trim wall (4), this trim wall having a hidden face (4b) and an opposing visible face (4a), the lining structure having a retaining element (6) located on the side of the hidden face that bears against same and a lining element (7) located partially on the side of the visible face and rigidly connected to the retaining element (6), the lining element (7) having an outer edge (8) framing the opening (3) and bearing against the visible face (4a), an inner edge (9) passing through the opening (3) and cooperating with the retaining element (6) on the side of the hidden face (4b), the inner edge defining a frame in which two opposing sides (9a, 9b) are extended by wall portions (10, 10') in a direction substantially perpendicular to the trim wall (4), a bar (11) extending along another side (9c) of the inner edge (9), at a distance therefrom, linking the ends of said wall portions, **characterized in that** the retaining element (6) includes:
- a U-shaped frame (15) with two opposing arms (15a, 15b) linked at one of the ends thereof by a linking arm (15c), said U-shaped frame (15) being arranged about the inner edge (9) of the lining element, in cooperation with this latter, the frame (15) being large enough not to pass through the opening (3),
- an M-shaped retaining tab (18) comprising two arms (18a, 18b) of which one end is linked to one of the opposing arms (15a, 15b) of the U-shaped frame (15), at a distance from the linking arm (15c) of this latter and close to said bar (11), these arms (18a, 18b) being linked at the other end by a middle portion (18c), these arms (18a, 18b) lying in the same plane that is substantially parallel to the trim wall and passing between the bar (11) and the side (9c) of the inner edge along which the bar (11) lies, and the middle portion (18c) extending in a plane inclined in relation to the plane of the arms (18a, 18b) and being located at least partially opposite an outer face of the bar (11) of the lining element, at a predetermined distance therefrom.

2. Assembly (1) according to Claim 1, **characterized in that** the retaining element (6) also has a stiffening rib (17) linking the arms (18a, 18b) of the retaining tab (18) on the side of the end thereof linked to the U-shaped frame.

3. Assembly (1) according to Claim 1 or 2, **characterized in that** the middle portion (18c) of the retaining tab (18) has a flat portion (19) located at least partially opposite the outer face of the bar (11) of the lining element.

4. Assembly (1) according to any one of Claims 1 to 3, **characterized in that** the middle portion (18c) of the retaining tab (18) is located at least partially opposite a convex portion (20) of the bar (11) of the lining element.

5. Assembly (1) according to any one of Claims 1 to 4, **characterized in that** the retaining tab (18) is such that the plane of the middle portion (18c) forms an angle of between 10° and 45° with the plane of the arms (18a, 18b).

6. Assembly (1) according to any one of Claims 1 to 5, **characterized in that** the arms (18a, 18b) of the retaining tab are linked to the U-shaped frame (15) by linking tabs (18d, 18'd) that are substantially parallel to the bar (11) and that each have a seat (17a, 17b) designed to receive the wall portions (10, 10') extending the inner edge (9) of the lining element.

7. Assembly (1) according to any one of Claims 1 to 6, **characterized in that** the inner edge (9) of the lining element (7) has, along the sides thereof that are extended by the wall portions (10, 10'), on the faces opposite these sides, two elongate tabs (13a, 13b) lying substantially perpendicular to the bar (11) and projecting from the lining element (7) on the same side as the lining element passing through the space separating the bar (11) from the side of the inner edge along which same extends.

8. Assembly (1) according to any one of Claims 1 to 7, **characterized in that** the lining element (7) has a shutter (21) closing the opening (3) in the trim wall.

9. Assembly (1) according to any one of Claims 1 to 8, **characterized in that** the retaining element (6) is made from a polymer part.

10. Vehicle including an assembly (1) according to any one of Claims 1 to 9.
